**Europäisches Patentamt**

(19) **European Patent Office**

**Office européen des brevets**

(11) Veröffentlichungsnummer: **0 080 515 B1**

(12) # EUROPÄISCHE PATENTSCHRIFT

(45) Veröffentlichungstag der Patentschrift:
**19.06.85**

(21) Anmeldenummer: **81109793.0**

(22) Anmeldetag: **20.11.81**

(51) Int. Cl.⁴: **B 23 Q 1/26,** F 16 C 29/04, F 16 C 29/06

(54) **Führungssystem für lineare Bewegungen eines Werkzeugträgers.**

(43) Veröffentlichungstag der Anmeldung:
**08.06.83 Patentblatt 83/23**

(45) Bekanntmachung des Hinweises auf die Patenterteilung:
**19.06.85 Patentblatt 85/25**

(84) Benannte Vertragsstaaten:
**AT CH DE FR GB IT LI LU NL SE**

(56) Entgegenhaltungen:
**DE - A - 1 425 143**
**DE - A - 2 530 907**
**DE - A - 3 013 410**
**FR - A - 1 043 374**
**FR - A - 1 124 901**
**GB - A - 1 081 669**
**GB - A - 1 090 087**
**GB - A - 2 061 408**
**US - A - 3 907 385**

(73) Patentinhaber: **Isert Elektronik, Hugo Isert, Bahnhofstrasse, D-6419 Eiterfeld (DE)**

(72) Erfinder: **Isert, Hugo, Isert Elektronik Bahnhofstrasse, D-6419 Eiterfeld (DE)**
Erfinder: **Both, Georg, Am Lütgen 12, D-6431 Hauneck (DE)**

(74) Vertreter: **Olbricht, Karl Heinrich, Dipl.-Phys., Am Weinberg 15, D-3556 Niederweimar (DE)**

**Beschreibung**

Die Erfindung bezieht sich auf ein Führungssystem für lineare Bewegungen eines Werkzeugträgers für Bohr-, Trenn-, Linier- und sonstige Werkzeuge im Abstand von einer Werkstückunterlage, das von einem aus Rundstäben bestehenden Laufschienenpaar und dem auf den Laufschinen mit rollender Reibung geführten Werkzeugträger oder dessen Halterung gebildet ist, wobei das Laufschienenpaar innerhalb eines den Stützrahmen des Systems bildenden U-Profils verläuft (DE-A-3 013 410).

Solche Führungssysteme sind hauptsächlich für Geräte zur Bearbeitung dünner Platten, wie Träger gedruckter Schaltungen, bestimmt. Sie lassen sich aber grundsätzlich überall dort verwenden, wo es auf eine exakte lineare Führung ankommt.

Die Erfindung, wie sie im Patentanspruch 1 gekennzeichnet ist, löst die Aufgabe, ein Führungssystem für lineare Bewegungen eines Werkzeugträgers zu schaffen, bei dem die aus Rundstäben bestehenden Laufschienen in einem wählbaren Abstand voneinander gehalten sind und bei dem die Führung des Werkzeugträgers schwer zugängliche Anordnungen der Führungsmittel vermeidet, zugleich aber die Möglichkeit bietet, zwischen einer Führung durch Kugelfolgen besonderer Art und einer Führung durch Rollen mit X-förmigem Querschnitt zu wählen.

Die Patentansprüche 2 bis 6 beziehen sich auf Ausführungsarten der Erfindung.

Es ist ein wesentlicher Vorteil der Erfindung, daß die Befestigung des Laufschienenpaares auf Lagerböcken durch Kraftschluß vollständig verrückungs- und verdrehungssicher ist. Außerdem bestehen die Lagerböcke aus einfachsten, leicht auswechselbaren Teilen; sie sind daher bequem auch nachträglich, insbesondere zusätzlich einbaubar. Dank der jeweils zweispurigen Führung des Werkzeugträgers ausschließlich an den Außenflanken des Laufschienenpaares bei spielgelsymmetrischer Lage von zweimal zwei Führungsspuren zur horizontalen wie zur vertikalen Mittelebene des Laufschienenpaares ergibt sich eine optimale Kräfteverteilung innerhalb des Führungssystems. Werden schließlich Kugelfolgen an der Stelle von Zwillingsrollen verwendet, so ist die Führung besonders zuverlässig und leichtgängig. Sie läßt sich in beiden Fällen völlig spielfrei einstellen.

Im folgenden wird die Erfindung anhand von Zeichnungen, die zwei Ausführungswege darstellen, näher erläutert. Es zeigen:

Fig. 1 einen Querschnitt durch ein erfindungsgemäßes Führungssystem mit Führung durch Rollen,

Fig. 2 eine Schnittansicht entsprechend Fig. 1, jedoch mit Führung durch Kugeln,

Fig. 3 in einem horizontalen Längsschnitt den Umlauf der Kugeln bei dem System nach Fig. 2,

Fig. 4 in Kopfansicht ein Detail aus Fig. 3,

Fig. 5 eine Seitenansicht und

Fig. 6 eine Draufsicht eines Lagerbocks (unter Weglassung seiner den Kraftschluß bewirkenden Teile).

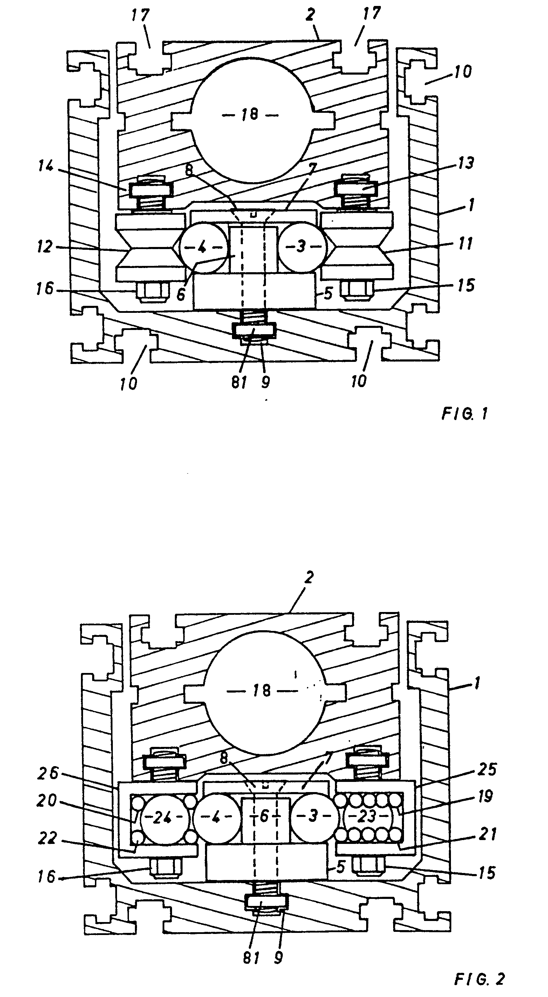

Das in Fig. 1 dargestellte Führungssystem für lineare Bewegungen eines Werkzeugträgers besteht grundsätzlich aus einem Laufschienenpaar 3, 4 in Form von Rundstäben. Sie sind auf einer der Länge der Führungsstrecke und der Belastung entsprechenden Anzahl von Böcken gelagert. Diese bestehen jeweils aus einer Grundplatte 5, einem zylindrischen Abstandhalter 6 und einer Druckplatte 7. Die Ränder der Druckplatte 7 übergreifen die Oberseiten der Laufschienen 3, 4 keilförmig.

Mittels einer durch diese Teile 5 bis 7 hindurchgehenden Druckschraube 8, deren Mutter 81 in einem Einzug im Boden des den Stützrahmen des Systems bildenden U-Profils 1 sitzt, werden die Teile 5 bis 7 zusammengehalten und an dem Stützrahmen 1 befestigt. Zugleich wird dadurch eine hervorragende kraftschlüssige Verbindung zwischen dem Lagerbock 5, 6, 7 und den Laufschienen 3, 4 hergestellt.

Innerhalb des Stützrahmens 1 ist der Werkzeugträger 2 oder auch seine Halterung durch Rollen 11, 12 auf den Laufschienen 3, 4 geführt, und zwar in Laufrichtung sich wenigstens einmal wiederholend. Diese Rollen 11, 12 haben einen X-förmigen Querschnitt. Sie sind demnach jeweils zweispurig in Punktberührung mit den Außenflanken des Laufschienenpaares 3, 4. Die Lage der zweimal zwei Führungsspuren ist spiegelsymmetrisch zur horizontalen wie zur vertikalen Mittelebene des Laufschienenpaares 3, 4. Die Rollen 11, 12 sind mit lotrechter Achse an der Unterseite des Werkzeugträgers 2 gelagert und einzeln exzentrisch einstellbar; hierfür sind Einzüge 13, 14 vorgesehen.

Weitere Einzüge 17, sämtlich mit T-Nuten, um auch Befestigungsschrauben z. B. für Abdeckplatten eindrehen zu können, befinden sich an der Oberseite des Werkzeugträgers 2. Ebenso ist der Stützrahmen 1 auf allen drei Seiten mit Einzügen 10 mit T-Nuten versehen. Schließlich weist der Werkzeugträger 2 noch einen großräumigen zentralen Einzug 18 als Durchgang für eine Antriebsspindel und als Sitz für deren Mutter auf.

Das in Fig. 2 veranschaulichte Führungssystem unterscheidet sich von demjenigen nach Fig. 1 dadurch, daß der Werkzeugträger 2 durch zweimal zwei lineare, endlos umlaufende Kugelfolgen 19, 21; 20, 22 auf den Laufschienen 3, 4 geführt ist. Die Kugeln sind dabei ständig in drei Punkten gestützt, und zwar während ihres Vorlaufes an der Laufschiene 3 bzw. 4, dem zylindrischen Körper 23 bzw. 24 sowie der oberen bzw. unteren Wand des Gehäuses 25 bzw. 26; während des Kugelrücklaufes bilden der zylindrische Körper 23 bzw. 24, die Rückwand und die obere bzw. untere Wand des Gehäuses 25 bzw. 26 die Kugellaufbahnen.

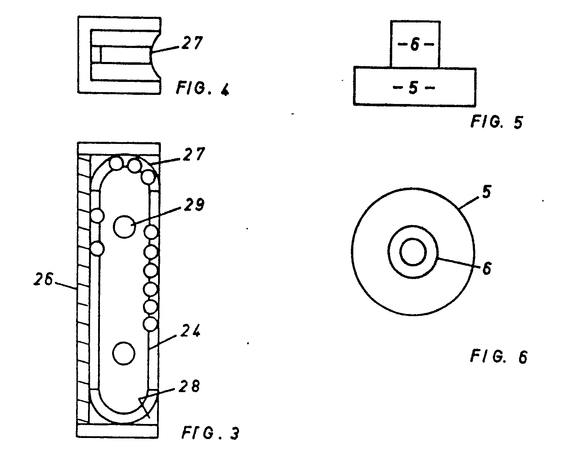

Die beiden Gehäuse 25, 26 von rechteckigem Querschnitt sind mit innenseitig konkav gebogenen Stirnwänden 27, 28 versehen, bei denen es sich zweckmäßig um angesetzte Körper aus Kunststoff handelt (Fig. 3 und 4). Die Fig. 3 zeigt außerdem, daß Exzenterschrauben 16 den zylindrischen Körper 24 und sein Gehäuse 26 an zwei durch Bohrungen 29 markierten Stellen mit dem Werkzeugträger 2 verbinden. Dabei handelt es sich um eine mit der Anordnung auf der Gegenseite des Laufschienenpaares 3, 4 völlig übereinstimmende, daher vertauschbare Anordnung.

Wie ein Vergleich der Fig. 1 und 2 sogleich erkennen läßt, sind auch die Rollenführung und die Kugelführung vollständig gegeneinander austauschbar.

## Patentansprüche

1. Führungssystem für lineare Bewegungen eines Werkzeugträgers für Bohr-, Trenn-, Linier- und sonstige Werkzeuge im Abstand von einer Werkstückunterlage, das von einem aus Rundstäben bestehenden Laufschienenpaar (3, 4) und dem auf den Laufschienen mit rollender Reibung geführten Werkzeugträger (2) oder dessen Halterung gebildet ist, wobei das Laufschienenpaar (3, 4), kraftschlüssig auf Böcken gelagert, innerhalb eines den Stützrahmen (1) des Systems bildenden U-Profils verläuft, dadurch gekennzeichnet, daß das Laufschienenpaar (3, 4) gemeinsam auf einer Folge von einzelnen Lagerböcken (5, 6) gelagert ist, die gesonderte Bauteile darstellen und Abstandhalter zwischen den Laufschienen (3, 4) bilden, und daß der Werkzeugträger (2) ausschließlich an den von den Lagerböcken wegweisenden Flanken des Laufschienenpaares (3, 4) und jeweils zweispurig geführt ist, wobei die Bogenabstände der zwei Führungsspuren von der horizontalen Mittelebene des Laufschienenpaares (3, 4) gleich groß sind.

2. Führungssystem nach Patentanspruch 1, dadurch gekennzeichnet, daß der einzelne Lagerbock aus einer Grundplatte (5), einem hohlzylindrischen Körper (6) als Abstandhalter zwischen den Laufschienen (3, 4) und einer Druckplatte (7) mit die Laufschienenoberseiten keilförmig übergreifenden Rändern sowie aus einer zentralen Druckschraube (8) besteht, deren Mutter (81) in einem Einzug (9) im Boden des Stützrahmens (1) sitzt.

3. Führungssystem nach Patentanspruch 1 oder 2, dadurch gekennzeichnet, daß der Werkzeugträger (2) an jeder der Laufschienen (3, 4) durch zwei in parallelen horizontalen Ebenen endlos umlaufende lineare Kugelfolgen (19, 21 bzw. 20, 22) mit jeweils in drei Punkten gestützten Kugeln geführt ist, wobei die Laufschiene (3 bzw. 4), ein dieser parallel an dem Werkzeugträger (2) angeordneter zylindrischer Körper (23 bzw. 24), der denselben Durchmesser wie die Laufschiene (3 bzw. 4) aufweist und an den Enden halbkugelförmig ausgebildet ist, sowie ein den zylindrischen Körper (23 bzw. 24) umschließendes, zu der Laufschiene (3 bzw. 4) hin offenes Gehäuse (25 bzw. 26) von rechteckigem Querschnitt mit innenseitig konkav gebogenen Stirnwänden (27, 28) zusammenwirkende Laufbahnen für die Kugeln beider Folgen (19, 21 bzw. 20, 22) bilden.

4. Führungssystem nach Patentanspruch 3, dadurch gekennzeichnet, daß jeder der zylindrischen Körper (23, 24) zusammen mit seinem Gehäuse (25 bzw. 26) durch Exzenterschrauben (15 bzw. 16) an dem Werkzeugträger (2) befestigt ist.

5. Führungssystem nach Patentanspruch 1 oder 2, dadurch gekennzeichnet, daß der Werkzeugträger (2) an jeder der Laufschienen (3, 4) durch wenigstens zwei an dem Werkzeugträger (2) in Laufrichtung hintereinander angeordnete und mit lotrechter Achse gelagerte Laufrollen (11 bzw. 12) von X-förmigem Querschnitt geführt ist.

6. Führungssystem nach einem der Patentansprüche 1 bis 5, dadurch gekennzeichnet, daß der oberseitig im wesentlichen mit dem Stützrahmen (1) abschließende Werkzeugträger (2) einen zentralen, großräumigen Einzug (18) aufweist, der für eine Antriebsspindel den Durchgang und für dessen Mutter den Sitz bildet.

## Claims

1. Guiding system for the linear movement of a holder supporting tools for drilling, cutting, ruling and other purposes at a distance to a work piece base, comprising a pair of runners (3, 4) made up of round rods and of the holder or its mount guided on the runners under rolling friction, the pair of runners (3, 4) being positively borne by pillow blocks and being arranged within a U-shaped profile forming the base frame (1) of the system, wherein the pair of runners (3, 4) is jointly borne by a series of individual pillow blocks (5, 6) forming separate components as well as spacers between the runners (3, 4) and wherein the tool holder (2) is guided along two tracks each and at those runner pair flanks only which point away from the pillow blocks, the arc spacings of each of the two guiding tracks to the horizontal center plane of the runner pair (3, 4) being equal.

2. Guiding system according to patent claim 1, wherein the individual pillow block is made up of a base plate (5), of a hollow cylindrical body (6) as a spacer between the runners (3, 4), of a backing plate (7) with wedge-shaped brims reaching over the upper sides of the runners and of a central pressing screw (8) whose associated nut (81) is in a channel (9) within the bottom of the base frame (1).

3. Guiding system according to patent claim 1 or 2, wherein the tool holder (2) is guided at each of the runners (3, 4) by two continuous linear series of balls (19, 21; 20, 22) revolving in parallel horizontal planes with the balls being supported at three points each, and wherein cooperating tracks for the balls of both series (19, 21; 20, 22) are formed by the runners (3, 4), by a cylindrical body (23; 24) that has the same diameter as the runners, is arranged parallel thereto at the tool holder (2) and is semispherical at its ends, and by a casing (25; 26) of rectangular cross section which has concave arched interior faces (27, 28) and which encloses the cylindrical body (23; 24) but is open towards the respective runner (3; 4).

4. Guiding system according to patent claim 3, wherein each of the cylindrical bodies (23, 24) is secured, together with its casing (25; 26), to the tool holder (2) by means of eccentric bolts (15; 16).

5. Guiding system according to patent claim 1 or 2, wherein the tool holder (2) is guided by at least two track rollers (11; 12) of X-shaped cross section arranged in tandem in the moving direction at the tool holder (2) with vertical bearing axes.

6. Guiding system according to any one of patent claims 1 to 5, wherein the upper side of tool holder (2) is substantially flush with the base frame (1) and the tool holder includes a central channel (18) of large dimensions which forms a passage for a driving shaft and receives the nut thereof.

**Revendications**

1. Système de guidage pour la translation d'un porte-outil pour outils d'alésage et de forage, à tronçonner, à ligner et pour des outils d'autres types, à une distance de l'appui pour les pièces à travailler, comprenant une paire de rails de roulements (3, 4) formés par des barres rondes, et le porte-outil (2) ou sa fixation guidés sur les rails de roulement à friction roulante, la paire de rails de roulement (3, 4) étant logée sur des supports par adhérence et se trouvant à l'intérieur d'un profilé en U formant le cadre porteur (1) du système, caractérisé en ce que la paire de rails de roulement est logée ensemble sur une succession de supports individuels (5, 6) représentant des composantes séparées en fonction d'écarteurs entre les rails de roulement (3, 4), et que le porte-outil (2) est guidé exclusivement sur les flancs de la paire de rails de roulement (3, 4) en position opposée par rapport aux supports et respectivement sur deux pistes, les distances des arcs des deux pistes de guidage à partir du plan médian horizontal de la paire des rails de roulement (3, 4) étant égales entre elles.

2. Système de guidage selon la revendication 1, caractérisé en ce que chaque support est formé d'une plaque de base (5), d'un corps cylindrique creux (6) comme écarteur entre les deux rails de roulement (3, 4) et d'une plaque de pression (7) aux bords recouvrant en forme de coin les faces supérieures des rails de roulement, et d'une vis de pression centrale (8) dont l'écrou (81) se trouve dans une rentrée (9) dans le fond du cadre porteur (1).

3. Système de guidage selon la revendication 1 ou 2, caractérisé en ce que le porte-outil (2) est guidé sur chacun des rails de roulement (3, 4) par deux successions de billes linéaires en circulation sans fin sur des niveaux parallèles horizontaux (19, 21; 20, 22), les billes étant soutenues en trois points chacune, des voies de roulement pour les billes des deux successions (19, 21; 20, 22) étant formés par le rail de roulement (3, 4), par un corps cylindrique (23; 24) disposé sur le porteoutil (2) parallèlement au rail de roulement (3, 4), le corps cylindrique (23; 24) ayant le même diamètre du rail de roulement (3, 4) et les extrémités enforme d'hémisphère, et par un carter (25; 26) incluant le corps cylindrique (23; 24), ouvert vers le rail de roulement (3; 4) et à section rectangulaire avec des abouts à curvature concave intérieurement (27, 28).

4. Système de guidage selon la revendication 3, caractérisé par le fait que chacun des corps cylindrique (23, 24) est fixé avec son carter (25; 26) par des vis excentriques (15; 16) sur le porte-outil (2).

5. Système de guidage selon la revendication 1 ou 2, caractérisé en ce que le porte-outil (2) est guidé sur chacun des rails de roulement (3, 4) par au moins deux galets (11; 12) à section en forme de X, disposés sur le porte-outil (2) l'un après l'autre en direction de roulement et logés avec leurs axes perpendiculaires.

6. Système de guidage selon quelqu'une des revendications 1 à 5, caractérisé en ce que le porte-outil (2), dont la face supérieure se termine essentiellement en correspondance avec le cadre porteur (1), présente une rentrée centrale (18) largement dimensionnée formant le passage pour une vis d'entraînement et le logement pour son écrou.

FIG. 1

FIG. 2

FIG. 4

FIG. 5

FIG. 3

FIG. 6